(19) Europäisches Patentamt
European Patent Office
Office européen des brevets

(11) Veröffentlichungsnummer: **0 016 722**
**A1**

(12) **EUROPÄISCHE PATENTANMELDUNG**

(21) Anmeldenummer: 80810047.3

(22) Anmeldetag: 08.02.80

(51) Int. Cl.³: C 08 K 5/53
C 08 L 67/02, C 08 G 63/68

(30) Priorität: 14.02.79 CH 1468/79

(43) Veröffentlichungstag der Anmeldung: 01.10.80 Patentblatt 80/20

(84) Benannte Vertragsstaaten: CH DE FR GB NL

(71) Anmelder: CIBA-GEIGY AG
Patentabteilung Postfach
CH-4002 Basel(CH)

(72) Erfinder: Buxbaum, Lothar, Dr.
Haus Litzelröder
D-6145 Lindenfels/Odenwald(DE)

(72) Erfinder: Breitenfellner, Franz, Dr.
Im Entich 9a
D-6140 Bensheim(DE)

(54) **Stabilisierte flammwidrige Kunststofformmasse und Verfahren zum Stabilisieren von mit organischen Bromverbindungen flammwidrig ausgerüsteten Kunststoffen.**

(57) Mit organischen Bromverbindungen flammwidrig ausgerüstete Kunststoffe, insbesondere lineare Polyester, werden gegen den thermischen Abbau während der Verarbeitung wirksam geschützt, wenn man Phosphonsäuren oder deren Ester als Stabilisatoren zugibt.

EP 0 016 722 A1

Croydon Printing Company Ltd.

BEZEICHNUNG GEÄNDERT
siehe Titelseite

3-12238/+

Stabilisierte flammwidrige Kunststoffformmasse

Die vorliegende Erfindung betrifft eine flammwidrig ausgerüstete Kunststoffformmasse, die mittels Phosphonsäuren oder deren Estern gegen die thermische Zersetzung während der Verarbeitung stabilisiert ist.

Duroplastische und thermoplastische Kunststoffe haben als Formmassen zur Herstellung von technischen Formteilen grosse Bedeutung erlangt. Für viele Anwendungszwecke, so z.B. bei Formteilen für die Elektroindustrie, ist es notwendig, die Brennbarkeit herabzusetzen.

Hierzu werden im allgemeinen den Kunststoffen halogenhaltige organische Verbindungen einverleibt, gegebenenfalls zusammen mit synergistisch wirkenden Verbindungen von Elementen der fünften Hauptgruppe des Periodensystems. Unter den halogenhaltigen Verbindungen sind oft die organischen Bromverbindungen besonders wirksam. Bei den für die

Kunststoffe notwendigen Verarbeitungstemperaturen neigen jedoch gerade die Bromverbindungen zur thermischen Zersetzung, was zur Schädigung des Kunststoffes führen kann. Als besonders nachteilig wird die mit der Zersetzung verbundene Gelb- bis Braunverfärbung des Kunststoffes und der Abbau des Makromoleküles empfunden.

Aufgabe vorliegender Erfindung ist es, die erwähnten Nachteile mit einem geeigneten Stabilisator zu vermeiden.

Gegenstand vorliegender Erfindung ist eine stabilisierte flammwidrige Kunststoffformmasse, die eine organische Bromverbindung als flammwidriges Mittel enthält, die dadurch gekennzeichnet ist, dass eine stabilisierend wirkende Menge mindestens einer Phosphonsäure oder deren Ester der Formel I,

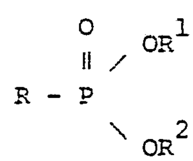

worin

R einen Kohlenwasserstoffrest aliphatischen oder aromatischen Charakters darstellt und $R^1$ und $R^2$ unabhängig voneinander ein Wasserstoffatom sind oder die Bedeutung von R haben, einverleibt sind.

Die Phosphonsäuren oder deren Ester werden gewöhnlich in einer Menge von 0,2 bis 5 Gew.-%, vorzugsweise 0,5 bis 2 Gew.-%, bezogen auf den Kunststoff, einverleibt.

Die Phosphonsäuren und deren Mono- oder Diester sind bekannte Verbindungen. Der Kohlenwasserstoffrest R kann 1 bis 20, vorzugsweise 1 bis 10 C-Atome enthalten und er kann die Bedeutung von Alkyl, Cycloalkyl, Aryl, Alkaryl, Aralkyl und Alkaralkyl haben.

Beispiele für Alkyl, das bevorzugt 1 bis 10, besonders 1 bis 6 C-Atome enthält, sind: Methyl, Aethyl, Propyl, i-Propyl, n-Butyl, t-Butyl,

Pentyl, Hexyl, Heptyl, Octyl, 2-Aethylhexyl, Nonyl, Decyl, Dodecyl, Tetradecyl, Octadecyl und Eicosyl.

Beispiele für Aryl und Alkaryl, die bevorzugt 6 bis 12 C-Atome enthalten, sind: Phenyl, Naphthyl, Methylphenyl, Dimethylphenyl, Aethylphenyl, Propylphenyl, Butylphenyl, Hexylphenyl, t-Butylphenyl, Methyl-(t-butyl)phenyl.

Beispiele für Aralkyl und Alkaralkyl, die bevorzugt 7 bis 12 C-Atome enthalten, sind: Benzyl, β-Phenyläthyl, Phenylpropyl, Methylbenzyl, Dimethylbenzyl, Dibutylbenzyl, Methylbutylbenzyl, (Methylphenyl)äthyl, (Dimethylphenyl)äthyl, (Dibutylphenyl)äthyl.

Besonders bevorzugt ist R Phenyl, Benzyl, Cyclohexyl oder Alkyl mit 1 bis 4 C-Atomen. $R^1$ und $R^2$ sind bevorzugt unabhängig voneinander Alkyl mit 1 bis 4 C-Atomen und stellen insbesondere Wasserstoffatome dar. Von den bevorzugten Phosphonsäuren sind besonders Methylphosphonsäure und Phenylphosphonsäure zu erwähnen.

Organische Bromverbindungen, die bei den Verarbeitungstemperaturen der Kunststoffe normalerweise der Zersetzung unterliegen, sind ebenfalls bekannt. Es kann sich hierbei um solche handeln, die dem Kunststoff als Mischkomponente einverleibt sind, oder um solche, die als reaktive Monomere in die Polymermoleküle eingebaut sind. Beispiele für letztere sind z.B. Tribromstyrol, Tetrabromterephthalsäure oder Tetrabrombisphenol-A.

Weitere Beispiele für organische Bromverbindungen sind:

Polytribromstyrol, Decabromdiphenyl, Tetrabromdiphenyl, Hexabromdiphenyläther, Decabromdiphenyläther, Tetrabromdiphenylsulfid, Hexabromdiphenylsulfon, 3-(2,4,6-Tribromphenoxy)-1,2-propandiol, Di- oder Tetrabromphthalsäure bzw. deren Anhydride, Dibromterephthalsäure, hydroxyäthyliertes Di- oder Tetrabrombisphenol-A, Tetrabrom-1,4-(dihydroxymethyl)-benzol, Tetrabrombenimidazolon, N,N'-(2-Hydroxyäthyl)4,5,6,7-tetrabrombenzimidazolon, N,N'-Alkylen-bis-tetrabromphthalimid. Weitere organische Bromverbindungen sind z.B. in der deutschen Offenlegungsschrift 2 242 450 beschrieben.

Die organischen Bromverbindungen werden oft zusammen mit synergistisch wirkenden Verbindungen der fünften Hauptgruppe des Periodensystems verwendet. Unter diesen sind besonders die Phosphor- und Antimonverbindungen zu nennen, z.B. Phosphate oder besonders Antimontrioxid.

Als Kunststoffe kommen sowohl Duroplaste und Thermoplaste in Frage. Beispiele sind:

1. Polymere, die sich von einfach oder doppelt ungesättigten Kohlenwasserstoffen ableiten, wie Polyolefine, wie z.B..Polyäthylen, das gegebenenfalls vernetzt sein kann, Polypropylen, Polyisobutylen, Polymethylbuten-1, Polymethylpenten-1, Polybuten-1, Polyisopren, Polybutadien, Polystyrol, Polyisobutylen, Copolymere der den genannten Homopolymeren zugrundeliegenden Monomeren, wie Aethylen-Propylen-Copolymere, Propylen-Buten-1-Copolymere, Propylen-Isobutylen-Copolymere, Styrol-Butadien-Copolymere, sowie Terpolymere von Aethylen und Propylen mit einem Dien, wie z.B. Hexadien, Dicyclopentadien oder Aethylidennorbornen; Mischungen der oben genannten Homo-polymeren, wie beispielsweise Gemische von Polypropylen und Polyäthylen, Polypropylen und Poly-Buten-1, Polypropylen und Polyisobutylen.

2. Halogenhaltige Vinylpolymere, wie Polyvinylchlorid, Polyvinylidenchlorid, Polyvinylfluorid, aber auch Polychloropren und Chlorkautschuke.

3. Polymere, die sich von $\alpha,\beta$-ungesättigten Säuren und deren Derivaten ableiten, wie Polyacrylate und Polymethacrylate, Polyacrylamide und Polyacrylnitril, sowie deren Copolymere mit anderen Vinylverbindungen, wie Acrylnitril/Butadien/Styrol, Acrylnitril/Styrol und Acrylnitril/Styrol/Acrylester-Copolymerisate.

4. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyral, Polyallylphthalat, Polyallylmelamin und deren Copolymere mit anderen Vinylverbindungen, wie Aethylen/Vinylacetat-Copolymere.

5. Homo- und Copolymere, die sich von Epoxyden ableiten, wie Polyäthylenoxyd oder die Polymerisate, die sich von Bisglycidyläthern ableiten.

6. Polyacetale, wie Polyoxymethylen und Polyoxyäthylen, sowie solche Polyoxymethylene, die als Comonomeres Aethylenoxyd enthalten.

7. Polyphenylenoxyde.

8. Polyurethane und Polyharnstoffe.

9. Polycarbonate.

10. Polysulfone.

11. Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.

12. Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.

13. Alkylharze, wie Glycerin-Phthalsäure-Harze und deren Gemische mit Melamin-Formaldehydharzen.

14. Ungesättigte Polyesterharze, die sich von Copolyestern gesättigter- und ungesättigter Dicarbonsäuren mit mehrwertigen Alkoholen, sowie Vinylverbindungen als Vernetzungsmitteln ableiten.

15. Natürliche Polymere, wie Cellulose, Gummi, sowie deren polymerhomolog chemisch abgewandelte Derivate, wie Celluloseacetate, -propionate und -butyrate, bzw. die Celluloseäther, wie Methylcellulose.

16. Eine bevorzugte Polymergruppe sind die thermoplastischen Polyester auf der Basis aliphatischer, cycloaliphatischer und/oder aromatischer Dicarbonsäuren, aliphatischer, cycloaliphatischer und/oder aromatischer Diole.

Als technisch wichtige Gruppe von Polyestern werden besonders jene angesehen, die mindestens 25 Mol-%, vorzugsweise 40 Mol-%, Terephthalsäurereste, und mindestens 25 Mol-%, vorzugsweise 40 Mol-% Alkylendiolreste enthalten, bezogen auf den Polyester. Die linearen oder verzweigten Alkylendiolreste können 2 bis 12, vorzugsweise 2 bis 6 C-Atome enthalten und sind besonders Aethylen- oder 1,4-Butylenglykolreste. Weitere für die Polyesterherstellung bekannte Monomere sowie Polyester sind z.B. in der deutschen Offenlegungsschrift 27 51 969 beschrieben. Bromhaltige Monomere, die in die Polyestermoleküle einkondensiert werden, wurden z.B. vorher beschrieben. Es kann sich hierbei um bromierte Dicarbonsäuren oder Diole handeln.

Die Verbindungen der Formel I werden den Substraten in einer Konzentration von 0,2 bis 5 Gew.-%, berechnet auf das zu stabilisierende Material, einverleibt.

Vorzugsweise werden 0,2 bis 3,0, besonders bevorzugt 0,5 bis 2,0 Gew.-% der Verbindungen, berechnet auf das zu stabilisierende Material, in dieses eingearbeitet. Die Einarbeitung kann beispielsweise durch Einmischen mindestens einer der Verbindungen der Formel I und gegebenenfalls weitere Additive nach den in der Technik üblichen Methoden, vor oder während der Formgebung, oder auch durch Aufbringen

der gelösten oder dispergierten Verbindungen auf das Polymere, gegebenenfalls unter nachträglichem Verdunsten des Lösungsmittel erfolgen.

Im Falle von vernetztem Polyäthylen werden die Verbindungen vor der Vernetzung beigefügt.

Die Verbindungen der Formel I können auch vor oder während der Polymerisation zugegeben werden, wobei durch einen möglichen Einbau in die Polymerkette flammwidrige Substrate erhalten werden können, in denen das Flammschutzmittel nicht flüchtig oder extraktionsfähig ist.

Als Beispiele weiterer Additive und inerter Zusätze, mit denen zusammen das Flammschutzmittel eingesetzt werden kann, sind Antioxidantien, UV-Stabilisatoren oder andere Lichtschutzmittel, Weichmacher, Fliessmittel, Entformungshilfsmittel, Kristallkeimbildungsmittel, optische Aufheller, Mattierungsmittel, Farbstoffe und Pigmente, inerte oder verstärkende Füllstoffe wie Russ, Talk, Kaolin, Metallpulver, Wollastonit, Glaskugeln oder -pulver, Quarzmehl, Asbest und Glasfasern.

Die erfindungsgemässen Formmassen führen überraschend zu farblich verbesserten Formteilen bei Verwendung von organischen Bromverbindungen als Flammschutzmittel. Bei Polyestern wird überraschend auch die Stabilität erhöht, ohne die bei Verwendung saurer Additive oft nachteilig auftretende verstärkte Korrosionswirkung. Im Gegensatz hierzu wird im allgemeinen bei sauren Additiven eine Verminderung der Stabilität beobachtet. Auch die mechanischen Eigenschaften, besonders die Zähigkeiteigenschaften, werden nur wenig beeinflusst.

Die nachfolgenden Beispiele erläutern die Erfindung näher.

## Beispiele

### Beispiel 1

In einem mit Rührer, Stickstoffeinlass, Trennkolonne und Temperaturmessung versehenen 10 l-Reaktor werden 3380 g Dimethylterephthalat (DMT), 3600 g Butandiol-1,4; 753 g 1,3Bis(2-hydroxyethyl)-4,5,6,7-tetrabrombenzimidazolon (7 Mol-% bezogen auf DMT) und 2,3 g Tetraisopropyltitanat eingefüllt und das Gemisch auf 140°C erhitzt. Unter Rühren und Stickstoffeinleiten werden innerhalb von 3 Stunden 95 % der theoretisch zu erwartenden Menge an Methanol abdestilliert, wobei die Temperatur des Reaktionsgemisches auf 215° C ansteigt.

Das so erhaltene Umesterungsprodukt wird in einen zweiten Reaktor umgefüllt und 447 g $Sb_2O_3$ aufgeschlämmt in Butandiol-1,4 zugefügt. Nach Erhitzen des Reaktionsgemisches auf 230°C wird innerhalb einer halben Stunde mit einer Wasserstrahlpumpe ein Vakuum von 40 mbar angelegt. Unter Erhöhung der Reaktionstemperatur auf 250°C wird das Vakuum mit einer Vakuumpumpe innerhalb von 45 Minuten auf 0,50 mbar erhöht.
Reaktionstemperatur und Vakuum werden während 1 1/2 Stunden bei diesen Reaktionsbedingungen gehalten und dann 55,9 g Phenylphosphonsäure zugegeben. Nach weiteren 30 Minuten Polykondensation wird der Reaktor entleert und der erhaltene Polyester mit einer relativen Viskosität von 1,90 granuliert.

3 kg dieses Granulats werden in einem 10 Liter Rotavaporkolben, der in ein Oelbad taucht, zuerst zwei Stunden unter einem Vakuum von 0,3 mbar bei 140°C getrocknet und dann die Reaktion bei gleichem Vakuum bei 205°C 50 Stunden lang in fester Phase weitergeführt. Das Endprodukt hatte eine relative Viskosität von 3,08.

An diesem Granulat wurden nach Verarbeitung zu entsprechenden Probekörpern folgende Eigenschaften gemessen:

| | |
|---|---|
| Brennbarkeit (UL-94): | V-O |
| Zugfestigkeit (DIN 53 455): | 57 $N/mm^2$ |
| Biegefestigkeit (DIN 53 452): | 92 $N/mm^2$ |
| E-Modul (Zugvers. DIN 53 457) | 2600 $N/mm^2$ |
| Schlagzähigkeit (DIN 53 453): | ohne Bruch |
| Kerbschlagzähigkeit (DIN 53 453): | 4,8 $kJ/m^2$ |

Prüfung der thermischen Stabilität:

An einer Spritzgussmaschine mit drei Zylinderheizzonen werden diese Heizzonen im 1. Versuch auf je 230°C und im 2. Versuch auf je 250°C eingestellt. Die Werkzeugtemperatur (Stufenplättchen) wird mit 80°C und die Zykluszeit mit 40 sec. bei beiden Versuchen konstant gehalten.

Als Mass für die thermische Stabilität wird der aus der vor und nach der Verarbeitung bestimmbare prozentuale Verlust bzw. die berechenbaren gespaltenen Esterbindungen in % = (1 : P) -(1 : PO) x 100, wobei PO der Polymerisationsgrad vor der Verarbeitung (im Granulat) und P der Polymerisationsgrad nach der Verarbeitung (Stufenplättchen) ist.

| | % gespaltene Esterbindungen |
|---|---|
| Versuch 1 (230°C): | 0,10 |
| Versuch 2 (250°C): | 0,22 |

Yellowness Index der Plättchen: 24,9

Vergleichsbeispiel

Es wurde ananlog zu Beispiel 1 gearbeitet, jedoch ohne Phenylphosphonsäurezusatz. Das festphasenkondensierte Granulat hat eine relative Viskosität von 2,68.

Das Ergebnis des thermischen Stabilitätstests ist:

| | % gespaltene Esterbindungen |
|---|---|
| Versuch 1 (230°C): | 0,14 |
| Versuch 2 (250°C): | 0,26 |

Yellowness Index der Plättchen: 27,7

Die Eigenfarbe der Formkörper ist gelblicher im Gegensatz zu den Formkörpern gemäss Beispiel 1, die weiss-opak sind.

Beispiel 2

Analog zu Beispiel 1 wird ein Polyester hergestellt, dem nach Erhitzen des Umesterungsgemisches auf 230°C 55,9 g Methanphosphonsäure statt Phenylphosphonsäure wie in Beispiel 1 zugesetzt werden. Die weitere Verarbeitung und Prüfung ist analog Beispiel 1.

Folgendes Ergebnis der thermischen Stabilitätsprüfung wird erhalten, wobei die Zylinderheizzonen auf 270°C eingestellt werden:

Prozent gespaltene Esterbindungen: 0,41
Vergleichsgranulat ohne Methanphosphonsäure: 0,50

Patentansprüche

1. Stabilisierte flammwidrige Kunststoffformmasse, die eine organische Bromverbindung als flammwidriges Mittel enthält, dadurch gekennzeichnet, dass eine stabilisierend wirkende Menge mindestens einer Phosphonsäure oder deren Ester der Formel I,

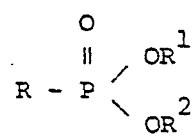

worin

R einen Kohlenwasserstoffrest aliphatischen oder aromatischen Charakters darstellt und $R^1$ und $R^2$ unabhängig voneinander ein Wasserstoffatom sind oder die Bedeutung von R haben, einverleibt sind.

2. Formmasse gemäss Anspruch 1, dadurch gekennzeichnet, dass die Phosphonsäure oder deren Ester in einer Menge von 0,2 bis 5, bevorzugt 0,5 bis 2 Gew.-% einverleibt ist, bezogen auf den Kunststoff.

3. Formmasse gemäss Anspruch 1, dadurch gekennzeichnet, dass der Kohlenwasserstoffrest R 1 bis 20, vorzugsweise 1 bis 10 C-Atome enthält.

4. Formmasse gemäss Anspruch 1, dadurch gekennzeichnet, dass R, $R^1$ und $R^2$ in ihrer Bedeutung als Kohlenwasserstoffrest Alkyl, Cycloalkyl, Aryl, Alkaryl, Alkaralkyl oder Aralkyl sind.

5. Formmasse gemäss Anspruch 4, dadurch gekennzeichnet, dass das Alkyl 1 bis 10, vorzugsweise 1 bis 6 C-Atome, das Cycloalkyl 5 bis 7, besonders 6 Ring-C-Atome, das Aryl 6 bis 12 C-Atome und das Aralkyl oder Alkaralkyl 7 bis 12 C-Atome enthält.

6. Formmasse gemäss Anspruch 1, dadurch gekennzeichnet, dass R Phenyl, Benzyl, Cyclohexyl oder Alkyl mit 1 bis 4 C-Atome ist.

7. Formmasse gemäss Anspruch 1, dadurch gekennzeichnet, dass $R^1$ und $R^2$ unabhängig voneinander Alkyl mit 1 bis 4 C-Atomen und insbesondere Wasserstoffatome bedeuten.

8. Formmasse gemäss Anspruch 1, dadurch gekennzeichnet, dass Methylphosphonsäure oder Phenylphosphonsäure einverleibt ist.

9. Formmasse gemäss Anspruch 1, dadurch gekennzeichnet, dass der Kunststoff ein Polyester auf der Basis aliphatischer, cycloaliphatischer und/oder aromatischer Dicarbonsäuren, insbesondere Terephthalsäure, und aliphatischen, cycloaliphatischen und/oder aromatischen Diolen ist.

10. Verfahren zum Stabilisieren von mit organischen Bromverbindungen flammwidrig ausgerüsteten Kunststoffen gegen thermische Zersetzung, dadurch gekennzeichnet, dass man eine stabilisierend wirkende Menge mindestens einer Phosphonsäure oder deren Ester der Formel I gemäss Anspruch 1 einverleibt.

Europäisches Patentamt

# EUROPÄISCHER RECHERCHENBERICHT

Nummer der Anmeldung
EP 80810047.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 547 498 (CHEMISCHE WERKE HÜLS AG)<br>+ Gesamt; besonders Seite 4, letzter Absatz bis Seite 5, Zeile 7, Seite 5, Zeilen 10-13; Beispiel 1, Versuch 5 +<br>-- | 1-10 |
| X | DE - B - 1 199 500 (GEVAERT PHOTO-PRODUCTEN N.V.)<br>+ Patentanspruch; Spalte 3, Zeilen 19,57 +<br>-- | 1-6,8-10 |
| X | DE - A1 - 2 442 835 (TOYO BOSEKI K.K.)<br>+ Ansprüche 1,5,6; Beispiel 5; Seite 4, letzter Absatz bis Seite 5, zweiter Absatz +<br>-- | 1-6,8-10 |
| | FR - A - 1 372 907 (FMC CORPORATION)<br>+ Ansprüche; Beispiele +<br>-- | 1,2,10 |
| | US - A - 3 991 019 (K.S. SHIM)<br>+ Ansprüche 1,2,4-6; Beispiele 4,5 +<br>-- | 1-3,10 |
| | US - A - 3 927 231 (G. DESITTER et al.)<br>+ Ansprüche; Beispiele +<br>-- | 1-6,8-10 |

KLASSIFIKATION DER ANMELDUNG (Int.Cl. 3)

C 08 K 5/53
C 08 L 67/02
C 08 G 63/68

RECHERCHIERTE SACHGEBIETE (Int. Cl. 3)

C 08 K
C 08 L 67/00
C 08 G 63/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 29-04-1980 | KALTENEGGER |

Europäisches Patentamt

# EUROPÄISCHER RECHERCHENBERICHT

Nummer der Anmeldung

EP 80810047.3

| EINSCHLÄGIGE DOKUMENTE | | | KLASSIFIKATION DER ANMELDUNG (Int.Cl.) 3 |
|---|---|---|---|
| Kategorie | Kennzeichnung des Dokuments mit Angabe, soweit erforderlich, der maßgeblichen Teile | betrifft Anspruch | |
| | US - A - 3 676 393 (A. PIIRMA)<br>+ Ansprüche; Spalte 2, Zeilen 20-50; Spalte 3, Zeile 2 bis Spalte 5, Zeile 17; Spalte 5, Zeilen 60-70; Spalte 7, Zeilen 21-58 +<br>-- | 1-10 | |
| | DE - A - 1 720 494 (DYNAMIT NOBEL AG)<br>+ Beispiele; Seite 3, Zeilen 3-13 +<br>-- | 1-6, 8-10 | RECHERCHIERTE SACHGEBIETE (Int. Cl.) 3 |
| | DE - A1 - 2 746 338 (RHONE-POULENC-TEXTILE)<br>+ Ansprüche; Beispiele +<br>---- | 1,2,9, 10 | |